# EUROPÄISCHE PATENTSCHRIFT

(11) **EP 1 987 265 B1**
(45) Veröffentlichungstag und Bekanntmachung des Hinweises auf die Patenterteilung: **25.01.2012**
(21) Anmeldenummer: 07721925.1
(22) Anmeldetag: 19.02.2007
(51) Int. Cl.: F16D 63/00

(54) **KLEMM- UND/ODER BREMSVORRICHTUNG**
CLAMPING AND/OR BRAKING DEVICE
DISPOSITIF DE BLOCAGE ET/OU DE FREINAGE

(30) Priorität: 21.02.2006 DE 102006008403
(43) Veröffentlichungstag der Anmeldung: 05.11.2008
(73) Patentinhaber: Hofmann, Klaus, 85567 Bruck (DE)
(72) Erfinder: Hofmann, Klaus, 85567 Bruck (DE)
(74) Vertreter: Eder, Thomas
(86) Internationale Anmeldenummer: PCT/DE2007/000308
(87) Internationale Veröffentlichungsnummer: WO 2007/095909

(56) Entgegenhaltungen:
- AU-B2- 432 719
- DE-A1- 19 715 141
- FR-A1- 2 676 784

## Beschreibung

Die Erfindung betrifft eine Klemm- und/oder Bremsvorrichtung mit den Merkmalen des Oberbegriffs des Patentanspruchs 1.

Klemm- oder Bremsvorrichtungen sind in den verschiedensten Ausführungsformen für die verschiedensten Anwendungsfälle bekannt. So ist in der EP-A-0 936 366 eine Bremsvorrichtung für eine Linearführung bekannt, welche einen Tragkörper aufweist, der längs einer Führungsschiene verfahrbar ist. Der Tragkörper weist Bremsbacken auf, die auf die beiden Längsseiten einwirken. Der Tragkörper ist H-förmig ausgebildet und weist einen dünnen elastisch biegsamen Steg und zwei untere Schenkel auf, mit welchen er die Führungsschiene umgreift. Zwischen jeweils einem unteren Schenkel und der Führungsschiene ist eine Bremsbacke angeordnet. Der Tragkörper ist mit zwei oberen Schenkeln versehen, die gemeinsam mit dem Steg einen Aufnahmeraum bilden, in welchem ein auf die oberen Schenkel einwirkendes krafterzeugendes Mittel vorgesehen ist. Hierbei kann es sich um eine hydraulisch oder pneumatisch betätigbare Kniehebelmechanik oder einen Piezoaktuator handeln. Des Weiteren kann als Kraftwandler ein hydraulisch oder pneumatisch betätigbarer Keilschieber vorgesehen sein, der in einem hierzu sich in Längsrichtung der Bremsvorrichtung verjüngend ausgebildeten Raum zwischen den oberen Schenkeln des Tragkörpers geführt ist. In allen Fällen erfolgt durch die Kraftbeaufschlagung der beiden oberen Schenkel ein Biegen des elastischen Stegs, so dass die beiden unteren Schenkel mit den Bremsbacken nach innen bewegt werden bzw. die Führungsschiene mit einer größeren Kraft beaufschlagen.

Nachteilig bei dieser bekannten Bremsvorrichtung in Verbindung mit dem Einsatz eines elektromechanischer Wandlers, beispielsweise eines Piezoelements, ist insbesondere dessen Empfindlichkeit gegenüber Erschütterungen oder anderweitige mechanische Belastungen.

Der Einsatz einer Kniehebelmechanik oder eines Keilschiebers bedeutet ebenso wie ein elektromechanischer Wandler einen hohen Montage- bzw. Herstellungsaufwand.

Zudem besteht insbesondere bei Klemmvorrichtungen die Forderung nach ausreichend hohen Klemmkräften, die sich bei bekannten Vorrichtungen nur mit einem relativ hohen konstruktiven und damit finanziellen Aufwand realisierten lassen.

Aus der US 5,855,446 ist eine hydraulische Klemmbuchse bekannt, welche an einer Welle ausgerichtet und mit ihr bspw. drehfest verbunden werden kann. Die Buchse weist einen im Wesentlichen stabilen Buchsenkörper auf, der in einem Abstand um eine Antriebswelle angeordnet ist. An diesen Buchsenkörper angrenzend und der Welle zugewandt ist eine mit Druck beaufschlagbare Kammer vorgesehen. Eine sich im wesentlichen parallel zur Welle erstreckende Seitenwand dieser Kammer dient hier gleichzeitig als Bremselement, welches bei Druckbeaufschlagung der Kammer durch die Expansion der Kammer gegen die Welle gedrückt wird, um so eine reibschlüssige Verbindung herzustellen. Durch eine Σ-förmige Ausbildung der seitlich angrenzenden Wände der Kammer soll verhindert werden, daß sich die Buchse bei Druckbeaufschlagung der Kammer schief zur Welle ausrichtet. Die Σ-förmigen Seitenwände der Kammer ermöglichen im Beaufschlagungsfall eine Ausdehnung dieser Seitenwände in radialer Richtung auf die Welle zu, noch bevor der zunehmende Kammerdruck auch die parallel zur Welle verlaufende Kammerwand gegen die Welle presst. So kann sich die Buchse rechtwinklig zur Wellenachse ausrichten, bevor die drehfeste Verbindung erzeugt wird.

Diese Klemmvorrichtung weist keine günstige Kräfteübersetzung für die Erzeugung hoher Anpresskräfte auf. Ferner ist die Kammer in ihrer Gestalt und insbesondere in ihrer Anordnungsmöglichkeit relativ zum Buchsenkörper eingeschränkt. Bremswirkung kann hier nur durch Beaufschlagung mit Überdruck erzielt werden, und das eigentliche Bremselement, welches gegebenenfalls hohe Antriebskräfte übertragen muss, ist nicht fest mit dem Buchsenkörper verbunden, sondern nur über die erzwungenerweise relativ instabile Druckkammer.

Aus der WO 01/34990 A1 ist eine Klemm- und/oder Bremsvorrichtung bekannt, bei der an einem Grundkörper eine mit Druck beaufschlagbare Kammer vorgesehen ist, die zumindest in einem Teilbereich von wenigstens einer biegbaren aber zug- und/oder druckfesten Wandung begrenzt ist. Die der Wandung gegenüberliegende Begrenzung der Kammer kann ebenfalls wie die erste Wandung ausgeführt sein. Sie kann aber auch starrer Teil eines Körpers sein. Bevorzugt liegen die Wandungen in einem verhältnismäßig geringen Abstand. Die aus der Verformung der Kammer resultierenden Kräfte werden mindestens zum Teil in Richtung bzw. entlang der Wandung geleitet und im Bereich der Verbindung der Wandung mit einem Grundkörper in diesen eingeleitet. Wählt man den Angriffspunkt solcher Kräfte an dem Grundkörper geeignet aus, und ist dieser Grundkörper wenigstens teilweise elastisch verformbar, so können die Kräfte über diesen Grundkörper an andere Stellen des Grundkörpers, bspw. in Klemm- oder Bremsbereiche übertragen werden. Ein entsprechendes Brems- oder Klemmmittel in diesen Bereichen kann dann mittels der Kräfte in eine Beaufschlagungsposition hinein oder aus dieser heraus bewegt werden, um ein Führungselement oder ein zu klemmendes oder zu bremsendes Element zu bremsen oder freizugeben. Dabei kann sowohl aufgebrachter Über- als auch Unterdruck in der Kammer genutzt werden, um sowohl Zug- als auch Druckkräfte in den Grundkörper einzuleiten. Selbstverständlich können die Klemm- und/ oder Bremsbereiche vor und nach der Krafteinleitung noch in Eingriff mit dem Führungselement oder dem zu klemmenden oder zu bremsenden Element stehen, wobei sich jedoch Änderungen der Beaufschlagungskräfte zwischen den Klemm- und/oder Bremsbereichen und dem jeweils anderen Element ergeben.

Diese bekannte Klemm- und/oder Bremsvorrichtung geht von der Erkenntnis aus, dass eine geeignete Kammer bei Beaufschlagung mit Unter- oder Überdruck eine Verformung anstrebt. Wird diese Kammer zu einem großen Teil von wenigstens einer annähernd ebenen Wandung gebildet, so verursacht Über- oder Unterdruck in der Kammer zunächst eine Verformung in eine erste Richtung, welche im Wesentlichen senkrecht zu dieser Wandung verläuft. Um der Verformung (Expansion oder Kontraktion) in dieser ersten Richtung nachzugeben resultiert, daraus entsprechend umgekehrt eine Kontraktion oder Expansion der Kammer in eine im Allgemeinen senkrecht zur ersten Richtung (also im Wesentlichen parallel zu der Wandung) verlaufende zweite Richtung. Dabei wird die Tatsache genutzt, dass geringe Kräfte bzw. Verformungen in der ersten Richtung große Kräfte in der zweiten Richtung erzeugen, die zum Bremsen bzw. Klemmen oder zum Lösen vorgespannter Klemm- bzw. Bremsvorrichtungen genutzt werden können.

Aus der W02005//044491 A1 ist eine Dehnspanneinrichtung bekannt, welche einen Grundkörper aufweist mit einer an einem axialen Endbereich des Grundkörpers vorgesehenen, dünnwandigen Dehnbüchse, die eine zentrale Aufnahme für ein zu spannendes Bauteil bildet. Des Weiteren ist ein Spannring vorgesehen, welcher die Dehnbüchse unter Bildung einer dazwischen liegenden, ringförmigen Druckkammer umgibt und welcher mit dem Grundkörper verschraubt ist. Die Druckkammer ist mit einem Hydraulikmittel gefüllt. Die Dehnbüchse kann elastisch verformt werden, um ein Bauteil in der Aufnahme zu fixieren. Hierzu wird der Spannring unter Verkleinerung des Volumens der Druckkammer durch Verdrehen gegenüber dem Grundkörper axial verstellt. Das Hydraulikmittel ist bei dieser Dehnspanneinrichtung als elastischer Festkörper ausgebildet. Zwischen dem elastischen Feststoffkörper und einer Druckfläche des Spannrings ist ein Gleitringelement angeordnet, um eine axiale Druckkraft vom Spannring auf den Feststoffkörper zu übertragen. Durch die Verwendung des Gleitrings werden rein axiale Druckkräfte auf den Feststoffkörper eingeleitet und deren axiale Bewegung von der Drehbewegung des Spannrings entkoppelt.

Diese Dehnspanneinrichtung ermöglicht jedoch nur das Klemmen eines rotationssymmetrischen Körpers mittels des ringförmig ausgebildeten, als Hydraulikmittel dienenden Feststoffkörpers.

Schließlich ist aus der FR2 676 784, siehe Oberbegriff des Anspruchs 1, eine Kupplungsvorrichtung bekannt, bei der zwei konzentrisch ineinandergreifende Kupplungsteile mittels einer Klemmeinrichtung verbindbar sind, die aus mehreren, axial verlaufenden Zylindern bestehen, in welchen jeweils ein Elastomermaterial aufgenommen ist und welche am Außenumfang des inneren Kupplungsteils angeordnet sind. In das Elastomermaterial taucht jeweils ein axial verschiebbarer Stift ein, wodurch sich die betreffende Zylinderwandung radial nach außen wölbt. Hierdurch wird eine Klemmung bzw. Kupplung mit dem äußeren Kupplungsteil erreicht. Allerdings lassen sich damit nur relativ geringe Deformationen der Zylinderwandungen realisieren, die jedoch für das Kuppeln von ausreichend genau koaxial zueinander geführten Kupplungsteilen ausreichend sind.

Ausgehend von diesem Stand der Technik liegt der Erfindung die Aufgabe zugrunde, eine Klemm- und/oder Bremsvorrichtung zu schaffen, die als Hydraulikmedium einen Feststoffkörper mit den damit verbundenen Vorteilen aufweist und welche bei einfacher Bauweise eine flexible Anpassung an unterschiedlichste Klemm- und/oder Bremsaufgaben ermöglicht, wobei gleichzeitig ausreichend große Bewegungswege für das Beaufschlagungselement erzielbar sind.

Die Erfindung geht von der Erkenntnis aus, dass durch die Verwendung eines stift- oder dornartig ausgebildeten Betätigungselements, welches an beliebiger Position in das als Feststoffkörper ausgebildete Hydraulikmedium eingreifen bzw. einstechen kann, unterschiedlichste Klemm- und/oder Bremsaufgaben gelöst werden können.

Anders als bei der Dehnspanneinrichtung gemäß der W02005/044491 A1 ist es nicht erforderlich, ein Betätigungselement in Form eines Gleitrings an eine spezielle Geometrie des Feststoffkörper-Hydraulikmediums anzupassen. Somit können identisch ausgebildet Betätigungselemente zur Realisierung unterschiedlichster Klemm- und/oder Bremsvorrichtungen verwendet werden. Hierdurch ergeben sich Kostenvorteile sowohl bei Anpassungsentwickfungen als auch bei der Lagerhaltung für eine entsprechende Fertigung.

Nach der Erfindung ist das Feststoffkörper-Hydraulikmedium als elastischer Feststoffkörper ausgebildet. Grundsätzlich ist im Rahmen der vorliegenden Beschreibung ein als Feststoffkörper ausgebildetes Hydraulikmedium dahingehend zu verstehen, dass es sich um einen Feststoffkörper handelt, der sich bei einer Deformation im Wesentlichen inkompressibel verhält und welcher, analog zur einer Hydraulikflüssigkeit, eine im Wesentlichen gleichmäßige Druckverteilung innerhalb des Volumens und an den das Volumen begrenzenden Flächen zeigt.

Ein elastisches Verhalten weist den Vorteil auf, dass sich das Feststoffkörper-Hydraulikmedium jeweils wieder selbsttätig in eine Ausgangsgestalt des Volumens zurückzieht, wenn Kraftänderungen rückgängig gemacht werden, die zu einer Deformation des Volumens geführt haben. Bei einem derartigen elastischen Feststoffkörper kann es sich beispielsweise um einen geeigneten Elastomer handeln.

Erfindungsgemäß ist das Hydraulikmedium aus einem elastischen Feststoffkörper-Hydraulikmedium gebildet, welches ein flüssiges, pastöses oder aus einem Feststoffkörper niedriger Shorehärte (dessen Shorehärte ist in jedem Fall geringer als die Shorehärte des Feststoffkörper-Hydraulikmediums) bestehendes Sekundär-Hydraulikmedium umgibt. Hierdurch wird der Vorteil erreicht, dass eine Verdrängung oder Verlagerung von Material im Hydraulikmedium durch das Bewegen des Betätigungselements vornehmlich im Sekundär-Hydraulikmedium erfolgen kann. Das Sekundär-Hydraulikmedium übt seinerseits Druck auf das Festkörper-Hydraulikmedium und/oder das Beaufschlagungselement aus, in welchem dann pro Volumeneinheit nur noch eine geringere Verdrängung oder Verlagerung des Materials erforderlich ist. Hierdurch wird die Standzeit des gesamte Hydraulikmediums wesentlich verbessert.

Nach einer Ausführungsform der Erfindung kann das Beaufschlagungselement, welches die Klemm- und/oder Bremskräfte auf einen weiteren Körper überträgt, einstückig mit dem Gehäuse ausgebildet oder lösbar mit diesem verbunden sein, wobei das Beaufschlagungselement einen elastisch biegbaren Bereich aufweist, welcher vom Feststoffkörper-Hydraulikmedium beaufschlagt wird. Eine Volumenänderung des Feststoffkörper-Hydraulikmediums an einer beliebigen Stelle führt somit zu einer entsprechenden Volumenänderung des elastisch biegbaren Bereichs des Beaufschlagungselements.

Nach einer anderen Ausführungsform der Erfindung kann das Beaufschlagungselement als ein im Gehäuse verschiebbar geführter Kolben ausgebildet sein.

Das Feststoffkörper-Hydraulikmedium kann fest mit dem Beaufschlagungselement verbunden sein, beispielsweise durch Kleben oder Vulkanisieren.

Hierdurch ergibt sich, insbesondere im Fall eines als Kolben ausgebildeten Beaufschlagungselements, der Vorteil, dass sich bei Verwendung eines elastischen Feststoffkörper-Hydraulikmediums das Beaufschlagungselement zusammen mit dem Feststoffkörper-Hydraulikmedium wieder in die Ausgangsposition zurück bewegt. Das Verbinden kann im Fall eines Elastomers beispielsweise durch Verkleben oder Vulkanisieren erfolgen.

Ein erfindungsgemäß vorgesehenes Feststoffkörper-Hydraulikmedium kann einen Durchbruch aufweisen, durch welchen das Betätigungselement abdichtend geführt ist. Bei einem Eintauchen des Betätigungselements in das Hydraulikmedium, bzw. das Sekundär-Hydraulikmedium wird dieses auch mit entsprechend höherem Druck an das Betätigungselement gepresst, so dass die Dichtwirkung auch bei hohen Drücken gewährleistet ist.

Das Feststoffkörper-Hydraulikmedium kann jedoch anstelle eines Durchbruchs auch einen Membranbereich in Form einer ausreichend dünnen und flexiblen Wandung aufweisen, welche das Betätigungselement beaufschlagt, wobei der Membranbereich derart elastisch ausgebildet ist, dass der vorbestimmte Bewegungsweg des Betätigungselement ermöglicht wird. Hierdurch werden Dichtungsprobleme in Verbindung mit dem Betätigungselement generell vermieden.

Nach einer weiteren Ausführungsform kann das Feststoffkörper-Hydraulikmedium einen Wandungsbereich aufweisen, welcher den Bereich begrenzt, in dem das Sekundär-Hydraulikmedium eingeschlossen ist, und welcher mit der diesem Bereich abgewandten Oberfläche das Beaufschlagungselement beaufschlagt. Auf diese Weise ist es möglich, das Hydraulikelement als separates Bauteil auszubilden, insbesondere losgelöst vom Beaufschlagungselement.

Nach einer anderen Ausführungsform kann das Feststoffkörper-Hydraulikmedium einen ringförmig geschlossenen Wandungsbereich aufweisen, welcher den Bereich begrenzt, in dem das Sekundär-Hydraulikmedium eingeschlossen ist, wobei der ringförmig geschlossene Wandungsbereich seiner Stirnseite mit dem Beaufschlagungselement verbunden ist.

Nach einer Ausführungsform der Erfindung kann das Feststoffkörper-Hydraulikmedium eine zylindrische Form aufweisen oder ringförmig ausgebildet sein. Hierdurch ergibt sich eine einfache geometrische Form, die zusammen mit dem wenigstens einen stift- oder dornartig ausgebildeten Betätigungselement eine einfache Bauweise ermöglicht. Nach einer anderen Ausführungsform der Erfindung kann das wenigstens eine Betätigungselement als Stift ausgebildet sein, der in Richtung der Bewegungsrichtung des Stifts zur Erzeugung einer Druckerhöhung im Feststoffkörper-Hydraulikmedium gesehen, im rückwärtigen Bereich einen größeren Querschnitt aufweist als im vorderen Bereich, wobei der Stift das Feststoffkörper-Hydraulikmedium vollständig durchgreift. Hierdurch ergibt sich der Vorteil, dass eine Volumenänderung durch den Differenzquerschnitt erzeugt wird, der sich als Unterschied der Querschnittsflächen des vorderen und rückwärtigen Bereichs ergibt. Die Volumenänderung ist dabei (konstante Querschnitte im vorderen und rückwärtigen Bereich vorausgesetzt) gleich der Differenzquerschnittsfläche multipliziert mit dem jeweils gegebenen Bewegungsweg.

Gegenüber einem reinen Einstechen eines Dorns in ein Feststoffkörper-Hydraulikmedium wird hierdurch der Vorteil erreicht, dass jeweils nur eine relativ geringe Materialbewegung des Feststoffkörper-Hydraulikmediums bewirkt wird, was sich positiv auf die Haltbarkeit des Materials (Anzahl der Wiederholungszyklen) auswirkt.

Das vordere Ende eines derart ausgebildeten Stifts kann in eine Ausnehmung des Gehäuses eingreifen, welche eine solche Tiefe aufweisen muss (eine rein lineare Bewegung des Stifts vorausgesetzt), dass ein Bewegungsweg möglich ist, der die geforderte Volumenänderung erzeugt.

Nach einer weiteren Ausführungsform kann ein derart ausgebildeter Stift mit seinem vorderen Ende auch die betreffende Gehäusewandung durchragen. Hierdurch kann der Bewegungsweg des Stifts sichtbar gemacht werden. Gleichzeitig kann ein Verschleiß des Feststoffkörper-Hydraulikmediums auf diese Weise sichtbar gemacht werden, beispielsweise wenn das Stiftende mit zunehmender Anzahl von Betätigungen der Klemm- und/oder Bremsvorrichtung (in seiner Ausgangsstellung oder Endstellung) immer weiter aus dem Gehäuse herausragt.

Auf diese Weise können nicht nur Verschleißerscheinungen des Feststoffkörper-Hydraulikmediums sondern auch Verschleißerscheinungen des Beaufschlagungselements sichtbar gemacht werden.

Nach einer weiteren Ausführungsform der Erfindung kann das wenigstens eine Betätigungselement als Hülsenteil ausgebildet sein und zusätzlich ein Eingriffsteil vorgesehen sein, welches das Feststoffkörper-Hydraulikmedium teilweise oder vollständig durchgreift und welches einen Querschnitt aufweist, der im Wesentlichen komplementär zum Querschnitt des Innenraums des Hülsenteils ausgebildet ist. Auf diese Weise kann das Hülsenteil im Wesentlichen spielfrei auf dem Eingriffsteil verschoben werden, wobei das Hülsenteil während des gesamten möglichen Bewegungswegs mit dem Eingriffsteil in Eingriff stehen sollte.

Auch bei dieser Ausführungsform ergibt sich die Volumenänderung entsprechend dem axialen Verschiebeweg des Hülsenteils multipliziert mit der Querschnittsfläche der ringförmigen Wandung des Hülsenteils.

Bei dieser Ausführungsform kann das Eingriffsteil fest oder lösbar mit dem Beaufschlagungsteil oder einer Gehäusewandung verbunden sein. Dabei ermöglicht die Verbindung mit dem Beaufschlagungsteil das Realisieren einer Bewegung des Betätigungselements in derselben Richtung in der auch die Bewegung des Beaufschlagungselements erfolgen soll. Erfolgt die Bewegung des Beaufschlagungselements in einer andere Richtung, beispielsweise senkrecht zur Bewegungsrichtung des Betätigungselements, so kann das Eingriffsteil mit einer Gehäusewandung verbunden sein.

Nach einer Ausführungsform der Erfindung kann die Außenwandung des vorderen Endes des Hülsenteils, welches das Eingriffsteil umfasst, verjüngt ausgebildet sein, beispielsweise einen angefasten Bereich aufweisen.

Zur Betätigung des wenigstens einen Betätigungselements, um eine Volumenänderung (genau genommen eine Änderung der Gestalt des Volumens) des Feststoffkörper-Hydraulikmediums zu bewirken, kann beispielsweise ein Pneumatikzylinder oder ein Betätigungsseil vorgesehen sein.

Durch die Realisierung eines hydraulischen Prinzips mittels eines Feststoffkörpers bleibt der Vorteil des hydraulischen Prinzips erhalten, wonach im Fall eines Betätigungselements, welches eine kleine wirksame Querschnittsfläche aufweist, mit welchem das Feststoffkörper-Hydraulikmedium beaufschlagt wird, mit einer geringen Kraft ein hoher Druck im Feststoffkörper-Hydraulikmedium erzeugt werden kann. Dieser hohe Druck innerhalb des Feststoffkörper-Hydraulikmediums kann durch die Verwendung einer relativ großen Fläche, mit welcher das Beaufschlagungselement vom Feststoffkörper-Hydraulikmedium beaufschlagt wird, in eine hohe Klemm- und/oder Bremskraft umgesetzt werden.

Weitere Ausführungsformen der Erfindung ergeben sich aus den Unteransprüchen. Die Erfindung wird nachfolgend anhand in der Zeichnung dargestellter Ausführungsbeispiele verdentlicht. In der Zeichnung zeigen
- Fig. 1: einen schematischen Längsschnitt durch eine erste Ausführungsform einer Klemm- und/oder Bremsvorrichtung mit einem dornartigen Betätigungselement, wobei die Bewegungsrichtungen des Betätigungselements und des Beaufschlagungselements senkrecht zueinander stehen;
- Fig. 2: zeigt eine zweite Ausführungsform einer Klemm- und/oder Bremsvorrichtung mit einem ringförmigen Feststoffkörper-Hydraulikmedium;
- Fig. 3a: eine schematische, perspektivische Ansicht einer dritten Ausführungsform einer Klemm- und/oder Bremsvorrichtung mit einem hülsenförmigen Betätigungselement;
- Fig. 3b: einen Querschnitt durch die Ausführungsform in Fig. 3a;
- Fig. 4a: eine schematische Darstellung einer vierten Ausführungsform einer Klemm- und/oder Bremsvorrichtung mit einem stiftartigen Betätigungselement, welches das Feststoffkörper-Hydraulikmedium vollständig durchgreift;
- Fig. 4b: einen Längsschnitt durch die Ausführungsform in Fig. 4a;
- Fig. 5a: eine perspektivische Ansicht einer Spanneinrichtung mit drei Klemm- und/oder Bremsvorrichtungen;
- Fig. 5b: einen axialen Schnitt durch die Ausführungsform nach Fig. 5a;
- Fig. 6: eine perspektivische Ansicht einer Scheibenbremse mit einer weiteren Ausführungsform einer Klemm- und/oder Bremsvorrichtung mit einem Feststoffkörper-Hydraulikmedium;
- Fig. 7: einen Querschnitt einer Ausführungsform einer Klemm- und/oder Bremsvorrichtung ähnlich Fig. 3, jedoch mit einem Betätigungselement, das mit einem Hydraulikmedium zusammenwirkt, welches aus einer Kombination eines Feststoffkörper-Hydraulikmediums mit einem flüssigen oder pastösem Hydraulikmedium besteht;
- Fig. 8: einen Querschnitt einer Ausführungsform einer Klemm- und/oder Bremsvorrichtung ähnlich Fig. 7, wobei das Feststoffkörper-Hydraulikmedium das flüssige oder pastöse Hydraulikmedium bis auf den Durchgriffsbereich für das Betätigungselement einschließt;
- Fig. 9: einen Querschnitt einer Ausführungsform einer Klemm- und/oder Bremsvorrichtung ähnlich Fig. 7, wobei das Betätigungselement einen Membranbereich des Feststorfkörper-Hydraulikmediums beaufschlagt;
- Fig. 10: einen Querschnitt einer Ausführungsform einer Klemm- und/oder Bremsvorrichtung ähnlich Fig. 8, wobei das Betätigungselement einen Membranbereich des Feststoffkörper-Hydraulikmediums beaufschlagt;

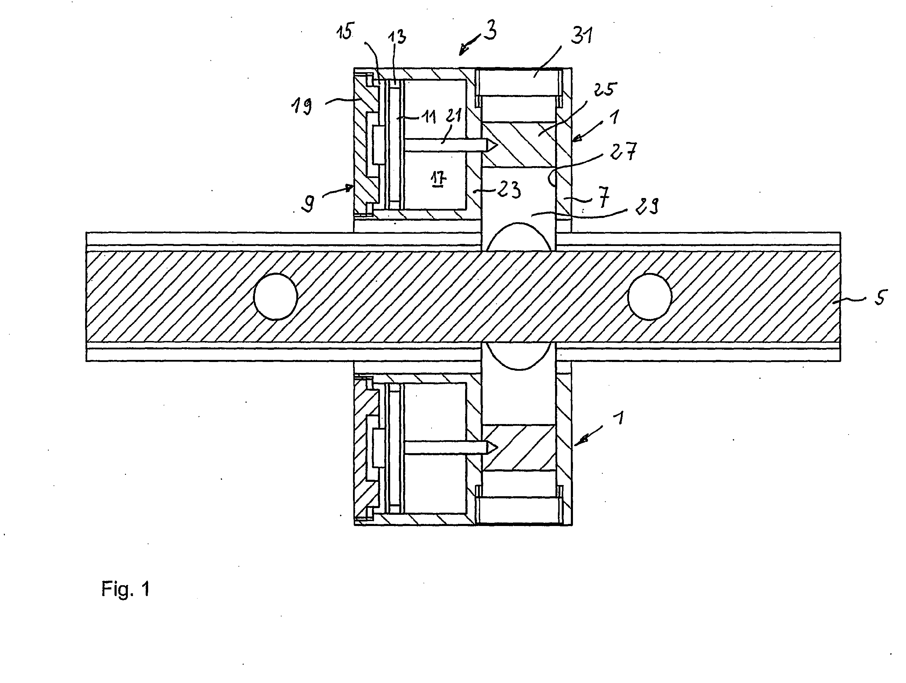

Die in Fig. 1 in einem schematischen Längsschnitt dargestellte Klemm- und/oder Bremsvorrichtung 1 zeigt einen schlittenartigen Teil 3, welcher verschiebbar auf einer Schiene 5 geführt ist. Hierzu üblicherweise vorhandene Wälzlager sind aus Gründen der Einfachheit nicht dargestellt.

Auf dem schlittenartigen Teil 3 ist die eigentliche Klemm- und/oder Bremsvorrichtung 1 vorgesehen. Diese umfasst ein Gehäuse 7, in welchem ein Pneumatikzylinder 9 vorgesehen ist. Der Pneumatikzylinder 9 umfasst einen Kolben 11, in dessen Umfang ein Einstich ausgebildet ist, in dem ein Dichtelement 13 aufgenommen ist. Das Dichtelement 13 dichtet bei einer Beaufschlagung der rückwärtigen Seite des Kolbens mit Druckluft, welche dem Druckraum 15 des Pneumatikzylinders 9 zuführbar ist, den Druckraum 15 gegenüber einem drucklosen Raum 17 ab, so dass auf den Kolben 11 eine in Fig. 1 nach rechts gerichtete Druckkraft ausgeübt wird. Der Wert der Druckkraft ergibt sich aus der Beaufschlagungsfläche der rückwärtigen Seite des Kolbens 11 multipliziert mit dem Druck der dem Druckraum 15 zugeführten Druckluft. Der Druckraum 15 bzw. der gesamte Pneumatikzylinder 9 ist auf seiner rückwärtigen Seite (in Fig. 1 links) mittels eines Deckels 19 verschlossen, der dicht in eine entsprechende, mit einem Gewinde versehene Bohrung des Gehäuses 7 eingeschraubt werden kann. Aus Gründen der Übersichtlichkeit sind entsprechende Zuleitungen für die Druckluft nicht dargestellt.

Mit der der mit Druckluft beaufschlagten Seite abgewandten Seite des Kolbens 11 ist ein dornartiges Betätigungselement 21 vorgesehen, das zusammen mit dem Kolben 11 bewegbar ist bzw. die vom Kolben 11 erzeugte Druckkraft aufnimmt. Das vordere Ende des Betätigungselements 21 ragt durch eine den Pneumatikzylinder begrenzende Wandung 23 in ein aus einem Feststoffkörper gebildetes Hydraulikmedium 25. Das Feststoffkörper-Hydraulikmedium weist eine zylindrische Form auf und ist in einer entsprechenden zylindrischen Ausnehmung 27 im Gehäuse 7 gehalten. In der zylindrischen Ausnehmung 27 des Gehäuses 7 ist ein Beaufschlagungselement in Form eines Kolbens 29 verschiebbar gehalten. Der Kolben 29 kann mit seiner Vorderseite bereits im Ausgangszustand an der Schiene 5 anliegen. Es kann jedoch im Ausgangszustand auch ein geringer Spalt zwischen der Vorderseite des Kolbens 29 und der Schiene 5 gegeben sein. Die rückwärtige Stirnseite des Kolbens 29 kann mit dem Feststoffkörper-Hydraulikmedium 25 verbunden sein, beispielsweise durch Kleben oder Vulkanisieren.

Die zylindrische Ausnehmung 27 ist mittels eines Verschlusselements 31 verschlossen, welches in den oberen Bereich der zylindrischen Ausnehmung 27 einschraubbar ist. Das Verschlusselement beaufschlagt mit seiner nach innen gewandten Stirnseite das Feststoffkörper-Hydraulikmedium 25.

Wird nun ausgehend von einem drucklosen Zustand des Pneumatikzylinders 9 dessen Druckraum 15 mit Druckluft beaufschlagt, so wird das dornartige Betätigungselement 21 mit seiner Spitze (weiter) in das Feststoffkörper-Hydraulikmedium 25 eingedrückt. Hierdurch wird eine Änderung der Gestalt des Volumens des Feststoffkörper-Hydraulikmediums 25 erzeugt. Da sich das Feststoffkörper-Hydraulikmedium 25 nur in Richtung der Bewegungsrichtung des Kolbens 29 ausdehnen kann, wird der Kolben 29 zunächst in Richtung auf die Schiene 5 zubewegt, sofern im Ausgangszustand der Kolben nicht bereits an der Schiene 5 anliegt. Verursacht das Eindringen des Betätigungselements 21 in das Hydraulikelement 25 eine Volumenverdrängung, die größer ist als die Volumenänderung, die erforderlich ist, um den Kolben 29 bei einem gegebenen Abstand zwischen dessen Vorderseite und der Schiene bis in eine Position zu bewegen, in der der Kolben 29 an der Schiene 5 anliegt, so ergibt sich innerhalb des Feststoffkörper-Hydraulikmediums 25 eine Druckerhöhung. Der Enddruck ist dabei abhängig von der Kraft, mit welcher der Kolben 11 das Betätigungselement 21 in das Feststoffkörper-Hydraulikmedium 25 hineindrückt. Maßgeblich hierfür ist die Querschnittsfläche des Betätigungselements 21 in dessen Betätigungsrichtung.

Nach den Gesetzen der Hydrostatik wird der Kolben 29 mit einer Druckkraft an die Schiene 5 angepresst, die sich aus dem im Feststorfkörper-Hydraulikmedium 25 erzeugten Druck und der Querschnittsfläche des Kolbens 29 ergibt. Maßgeblich ist auch hier die effektive Querschnittsfläche des Kolbens senkrecht zu seiner Bewegungsrichtung, die vom Feststoffkörper-Hydraulikmedium 25 beaufschlagt wird.

Da die Querschnittsfläche des Betätigungselements 21 klein gegen die Querschnittsfläche des Kolbens 29 ist, ergibt sich eine Beaufschlagungskraft für den Kolben 29, die dem Produkt aus der Beaufschlagungskraft für das Betätigungselement 21 und dem Verhältnis der Querschnittsfläche des Kolbens 29 zur Querschnittsfläche des Betätigungselements 21 ergibt.

Auf diese Weise kann das schlittenartige Teil 3, welches, wie in Fig. 1 dargestellt, auf beiden Seiten jeweils eine identische Klemm- und/oder Bremsvorrichtung 1 aufweist, auf der Schiene 5 geklemmt oder freigegeben bzw. hinsichtlich seiner Bewegung gebremst werden.

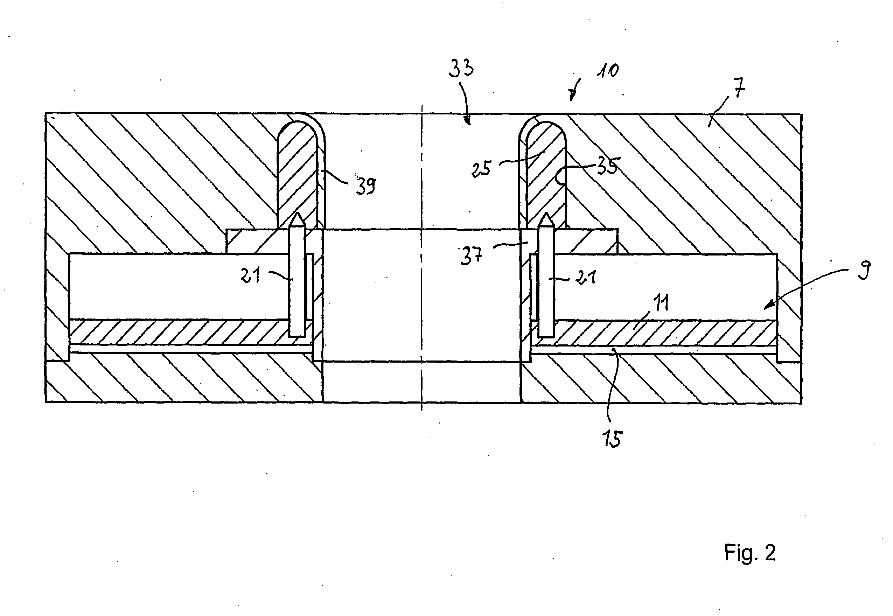

Fig. 2 zeigt einen schematischen Querschnitt durch eine weitere Ausführungsform einer Klemm- und/oder Bremsvorrichtung 10, welche zur Klemmung eines rotationssymmetrischen Teils, beispielsweise einer Welle geeignet ist. Das Gehäuse 7 weist in diesem Fall einen Aufnahmedurchbruch 33 auf, in welchem ein zu klemmendes Element, beispielsweise eine Welle, aufgenommen sein kann. Im Gehäuse 7 ist des Weiteren eine ringförmige Ausnehmung 35 vorgesehen, in welchem ein ringförmig ausgebildetes Hydraulikelement 25 aufgenommen ist. Die ringförmige Ausnehmung 35 ist mittels eines flanschartigen Teils 37 verschlossen, wobei die in axialer Richtung verlaufende Wandung des Teils 37 den Aufnahmedurchbruch 33 begrenzt. Im Gehäuse 7 ist des Weiteren ein ringförmig ausgebildeter Pneumatikzylinder 9 vorgesehen. Dieser umfasst einen ringförmigen Kolben 11, an dessen rückwärtiger Seite ein Druckraum 15 ausgebildet ist. Die Zuführleitungen und Zuführöffnungen für das pneumatische Medium sind in Fig. 2 aus Gründen der Einfachheit nicht dargestellt. Mit dem Kolben 11 sind mehrere dornartige Betätigungselemente 21 verbunden, die durch jeweils eine passende Bohrung in der senkrecht zur Achse der gesamten Vorrichtung verlaufende Wandung ragen und mit ihrem vorderen Ende das Feststoffkörper-Hydraulikmedium 25 beaufschlagen bzw. in dieses hineinragen.

Die die ringförmige Ausnehmung 35 zur Aufnahme des Feststoffkörper-Hydraulikmediums 25 begrenzende Innenwandung 39 des Gehäuses 7 bildet bei der in Fig. 2 dargestellten Ausführungsform einer Klemm- und/oder Bremsvorrichtung 10 ein Beaufschlagungselement für das Klemmen und/oder Bremsen des nicht dargestellten rotationssymmetrischen Elements, welches in den Aufnahmedurchbruch 33 einsetzbar ist.

Wird bei der in Fig. 2 dargestellten Klemm- und/oder Bremsvorrichtung 10 der Druckraum 15 mit Druckluft beaufschlagt, so wird der ringförmige Kolben 11 zusammen mit den dornartigen Betätigungselementen 21 in Richtung auf das Feststoffkörper-Hydraulikmedium 25 bewegt, sofern die Innenwandung 39 nicht bereits im Ausgangszustand an dem zu klemmenden Element anliegt. Ist zwischen dem zu klemmenden Element und der Innenwandung 39 im Ausgangszustand ein Spalt vorhanden, so werden die Betätigungselemente 21 so weit in das Feststoffkörper-Hydraulikmedium 25 hineingedrückt, bis die hierdurch verursachte Änderung der Gestalt des Volumens des Feststoffkörper-Hydraulikmediums 25 ein Anliegen der Innenwandung 39 an die Au-βenfläche des zu klemmenden Elements bewirkt. Anschließend erfolgt eine Erhöhung des Drucks im Feststoffkörper-Hydraulikmedium 25 entsprechend der mittels des Pneumatikzylinders 9 erzeugten Druckkraft, die sich auf die einzelnen Betätigungselemente 21 aufteilt. Das zu klemmende Element wird damit mit einer auf dessen Umfangsfläche wirkenden Anpresskraft gehalten, die sich aus dem Produkt der am zu klemmenden Element anliegenden Fläche der Wandung 39 und dem im Feststoffkörper-Hydraulikmedium 25 wirksamen Druck ergibt.

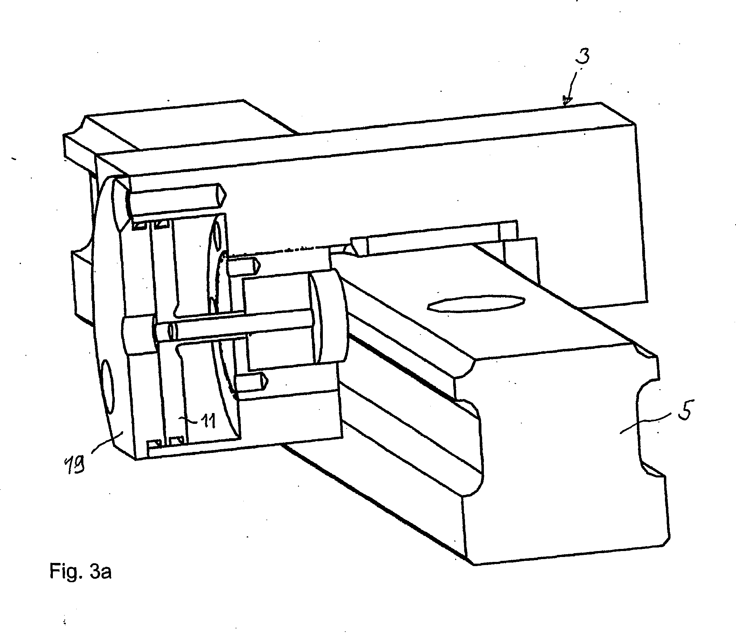

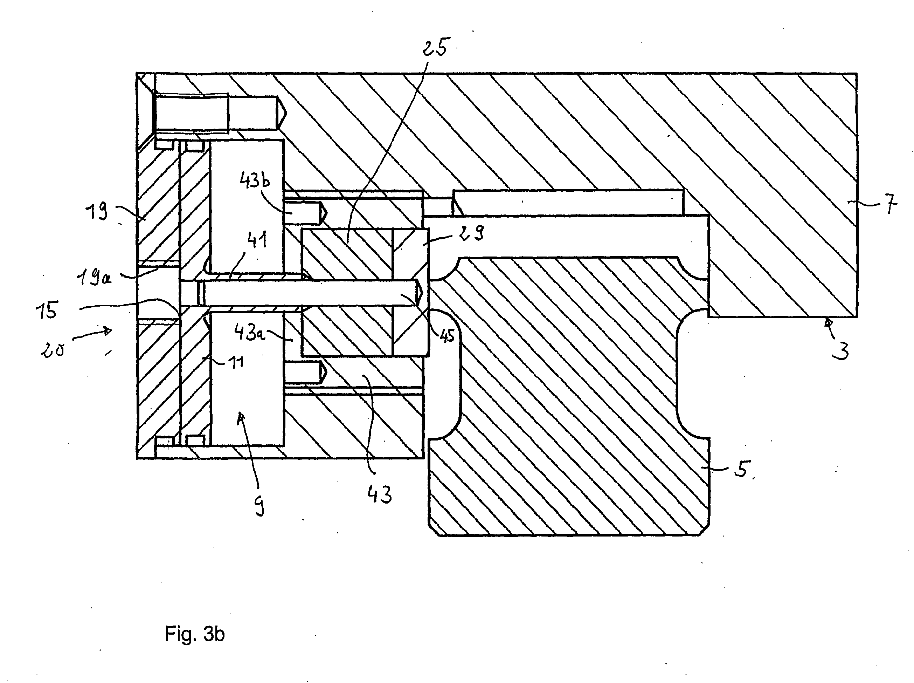

Die in Fig. 3 dargestellte weitere Ausführungsform betrifft wieder das Bremsen bzw. Klemmen eines auf einer Schiene 5 geführten schlittenartigen Teils 3. In dem in Fig. 3 dargestellten, schlittenartigen Teil 3 ist eine Klemm- und/oder Bremsvorrichtung 20 vorgesehen, welche wiederum einen Pneumatikzylinder 9 mit einem Kolben 11 umfasst. Der Pneumatikzylinder 9 ist mit einem Deckel 19 verschlossen, welcher eine entsprechende Bohrung im Gehäuse 7 verschließt. Wie aus Fig. 3 ersichtlich, kann der Deckel 19 mit dem Gehäuse 7 verschraubt werden. Der Deckel 7 weist eine Gewindebohrung 19a auf, in welche eine Anschlussleitung für das Zuführen von Druckluft eingeschraubt werden kann.

An der dem Druckraum 15 bzw. der Gewindebohrung 19a abgewandten Seite des Kolbens 11 ist ein hülsenartiges Betätigungselement 41 vorgesehen, welches eine zur Bewegungsrichtung des Kolbens 11 parallele Achse aufweist. Das Betätigungselement 41 durchgreift die Bodenwandung 43a eines topfförmigen Aufnahmeelements 43, in welchem ein Feststoffkörper-Hydraulikmedium 25 aufgenommen ist. Der Aufnahmeraum des topfförmigen Aufnahmeelements 43 für das Feststoffkörper-Hydraulikmedium 25 ist auf seiner offenen Seite durch ein Beaufschlagungselement in Form eines Kolbens 29 begrenzt. Der Kolben 29 ist mit einem stiftförmigen Eingriffsteil 45 verbunden, welches das Feststoffkörper-Hydraulikmedium 25 durchgreift und in das hülsenartige Betätigungselement 41 eingreift. Die Geometrie des Eingriffsteils 45 und die Geometrie des hülsenartigen Betätigungselements sind dabei jeweils so aufeinander abgestimmt, dass das Betätigungselement 41 im Wesentlichen spielfrei auf dem Eingriffsteil 45 geführt ist. Hierdurch wird zum Einen ein Verkanten bei der Verschiebebewegung vermieden und zum Anderen wird verhindert, dass Feststoffkörper-Hydraulikmedium in einen zu großen Spalt zwischen der Innenwandung des hülsenartigen Betätigungselements 41 und der Außenwandung des in dieses eingreifenden Eingriffsteils 45 hineingepresst wird.

Wird bei der in den Fig. 3a und 3b dargestellten Klemm- und/oder Bremsvorrichtung 20 der Kolben 11 des Pneumatikzylinders 9 mit Druckluft beaufschlagt, so wird das Betätigungselement 41, welches verschiebbar auf dem Eingriffsteil 45 geführt ist, aus einer Ausgangsposition (weiter) in das Feststoffkörper-Hydraulikmedium 25 hineingedrückt. Wie bereits zuvor in Verbindung mit den Ausführungsformen nach den Fig. 1 und 2 erläutert, ergibt sich hierbei zunächst ein Schließen eines gegebenenfalls bestehenden Spalts zwischen der Vorderseite des als Beaufschlagungselement wirkenden Kolbens 29 und der entsprechenden Anlagefläche der Schiene 5 und anschließend eine Druckerhöhung im Feststoffkörper-Hydraulikmedium 25. Die Druckerhöhung ist bei dem in Fig. 3 dargestellten Ausführungsbeispiel abhängig von der ringförmigen Querschnittsfläche des hülsenförmigen Betätigungselements 41 und der auf dieses wirkenden Kraft, die vom Pneumatikzylinder 9 erzeugt wird. Die auf die Schiene 5 mittels des Beaufschlagungselements bzw. den Kolben 29 ausgeübte Kraft ergibt sich wiederum aus der vom Feststoffkörper-Hydraulikmedium 25 beaufschlagten Fläche des Kolbens 29 sowie dem im Feststoffkörper-Hydraulikmedium herrschenden Druck. Wie bereits zuvor beschrieben, ergibt sich hierdurch wieder eine Übersetzung der mittels des Betätigungselements 41 auf das Feststoffkörper-Hydraulikmedium 25 ausgeübten Kraft entsprechend dem Verhältnis zwischen der vom Feststoffkörper-Hydraulikmedium 25 beaufschlagten Fläche des Kolbens 29 und der effektiv wirksamen ringförmigen Querschnittsfläche des Betätigungselements 41.

Wie aus Fig. 3b ersichtlich, dient das topfförmige Aufnahmeelement 43 zur Einstellung eines Spalts zwischen dem Kolben 29 und der Schiene 5 bzw. zur exakten Positionierung des Kolbens 29 in seiner Ausgangslage in Bezug auf die Schiene 5. Hierzu ist das topfförmige Element mittels einer Gewindebohrung in das Gehäuse 7 einschraubbar und auf diese Weise verstellbar. Zur Verstellung dienen Bohrungen 43b in der rückwärtigen Stirnseite des topfförmigen Elements 43, in welches ein entsprechendes Werkzeug mit Vorsprüngen zur Drehung des Elements 43 eingreifen kann.

Selbstverständlich kann bei dieser Ausführungsform, ebenso wie bei allen anderen Ausführungsformen bereits im Ausgangszustand, d.h. im drucklosen Zustand des Pneumatikzylinders bzw. in der Ausgangsposition des Betätigungselements 41 bzw. 21 eine Vorspannung zwischen dem Beaufschlagungselement und dem zu klemmenden Element eingestellt werden. Hierzu sollte die Ausgangsstellung des Betätigungselements durch einen Anschlag fixiert sein.

Die bei der Ausführungsform gemäß Fig. 3 realisierte Klemm- und/oder Bremsvorrichtung 20 mit einem hülsenartigen Betätigungselement weist den Vorteil auf, dass infolge der kleinen Durchmesseränderung beim Eindrücken des Betätigungselements 41 in das Feststoffkörper-Hydraulikmedium 25 im Feststoffkörper-Hydraulikmedium 25 lediglich eine geringe Verschiebung von Material bzw. nur geringe Bewegungen von differenziell kleinen Materialvolumina des Hydraulikelements 25 erforderlich sind. Das Material des Feststoffkörper-Hydraulikmediums 25 ist somit geringeren Belastungen ausgesetzt, was zu einer verbesserten Haltbarkeit und Standzeit des Materials führt.

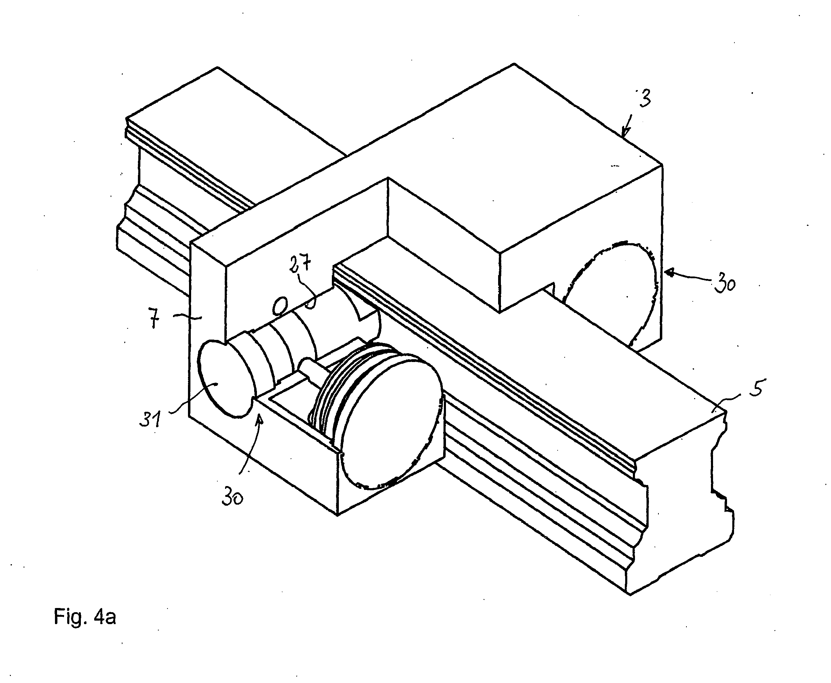

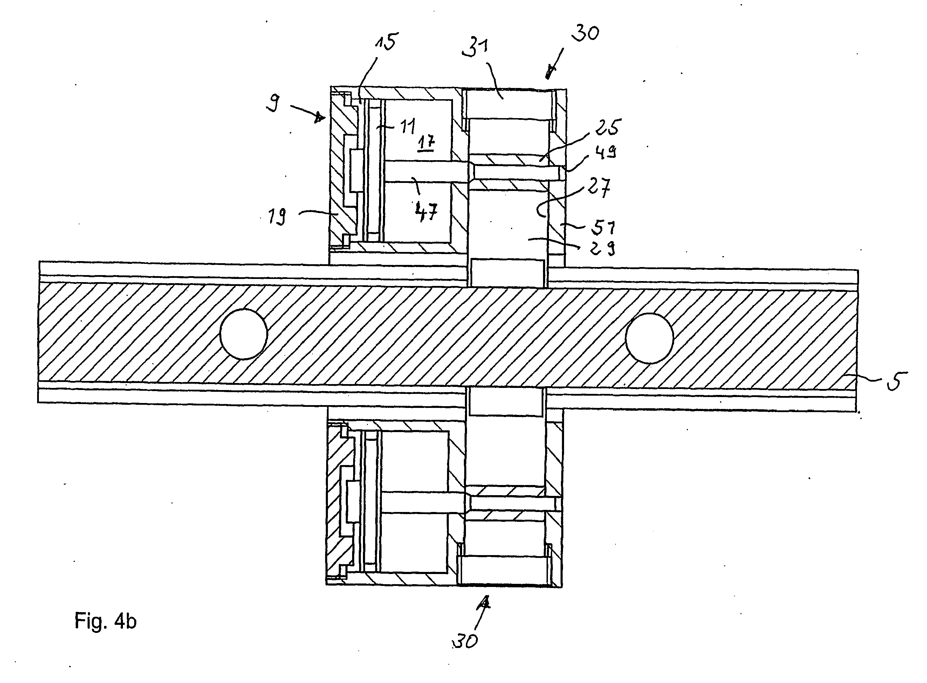

Auch Fig. 4 zeigt ein schlittenartiges Teil 3, welches verschiebbar auf einer Schiene 5 geführt ist. Die in das schlittenartige Teil 3 integrierte Klemm- und/oder Bremsvorrichtung 30 unterscheidet sich von der in Fig. 3 dargestellten Ausführungsform dadurch, dass die Bewegungsrichtungen von Betätigungselement und Beaufschlagungselement senkrecht zueinander stehen. Das Prinzip der Klemm- und/oder Bremsvorrichtung 30 gemäß Fig. 4 entspricht somit weitestgehend der Ausführungsform nach Fig. 1. Es kann somit weitestgehend auf die vorstehenden Ausführungen in Verbindung mit der Ausführungsform gemäß Fig. 1 verwiesen werden.

Im Unterschied zu der Ausführungsform der Klemm- und/oder Bremsvorrichtung 1 nach Fig. 1 weist die Klemm- und/oder Bremsvorrichtung 30 gemäß Fig. 4 jedoch ein stiftartiges Betätigungselement 47 auf, welches in seinem rückwärtigen Bereich einen größeren Durchmesser bzw. einen größeren Querschnitt aufweist als in seinem vorderen Bereich, wobei das stiftartige Betätigungselement das Feststoffkörper-Hydraulikmedium 25 vollständig durchgreift und mit seinem vorderen Ende in einen Durchbruch in der Gehäusewandung 51 ragt. Die Funktionsweise der Klemm- und/oder Bremsvorrichtung 30 in Bezug auf das Bewirken einer Änderung der Gestalt des Volumens des Feststoffkörper-Hydraulikmediums 25 ist vergleichbar mit der betreffenden Funktionsweise der Ausführungsform einer Klemm- und/oder Bremsvorrichtung 20 gemäß Fig. 3. Auch hier wird eine Aufweitung eines Durchbruchs im Feststoffkörper-Hydraulikmedium 25 durch das Einschieben eines Bereichs mit größerem Durchmesser bzw. größerer Querschnittsfläche erreicht. Anstelle eines teleskopartig ein Eingriffsteil umfassenden Betätigungselements 41 wird bei der Ausführungsform nach Fig. 4 jedoch ein einteiliges, stiftartiges Betätigungselement 47 mit einer entsprechenden Änderung des Querschnitts verwendet.

Die durch die Änderung der Gestalt des Volumens des Feststoffkörper-Hydraulikmediums 25 bewirkt Ausübung einer Kraft auf den Kolben 29, welcher als Beaufschlagungselement dient, ist wiederum identisch mit der betreffenden Funktionsweise der Ausführungsform nach Fig. 1.

Da bei der Ausführungsform einer Klemm- und/oder Bremsvorrichtung 30 nach Fig. 4 das Betätigungselement 47 durch den Durchbruch 49 in der Gehäusewandung 51 ragt, kann dies als Erkennungszeichen dienen, ob sich das System in der Ausgangsstellung oder der geklemmten Stellung befindet. Bei der in Fig. 4b dargestellten Ausgangsposition ragt das vordere Ende des Betätigungselements 47 noch nicht über die Wandung 51 hinaus. Wird der Kolben 11 des Pneumatikzylinders 9 zusammen mit dem Betätigungselement 47 in die klemmende Stellung bewegt, in welcher das Betätigungselement weiter in das Feststoffkörper-Hydraulikmedium 25 eintaucht, so ragt das vordere Ende des Betätigungselements 47 über die Wandung 51 hinaus, wodurch die klemmende bzw. bremsende Stellung der Vorrichtung 30 optisch angezeigt wird.

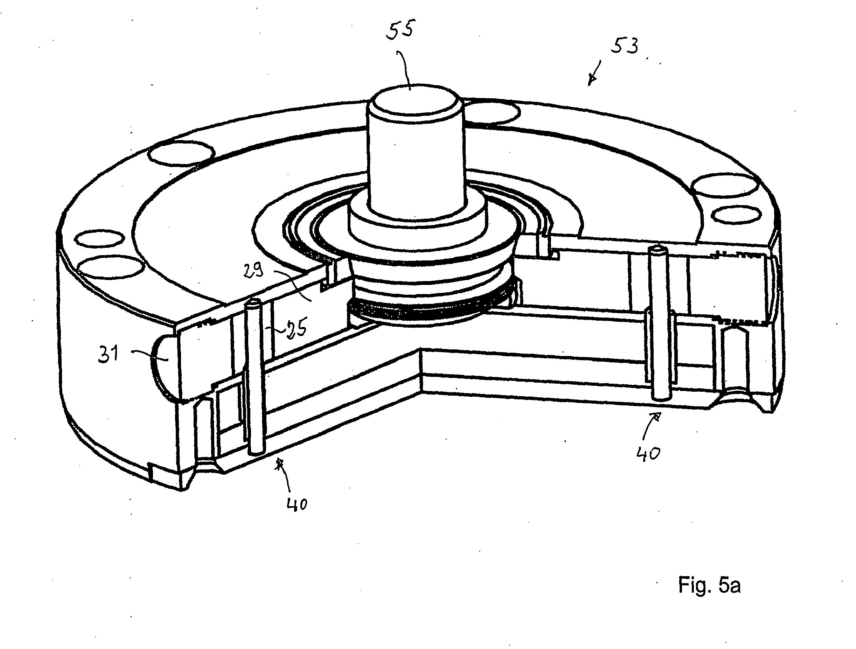

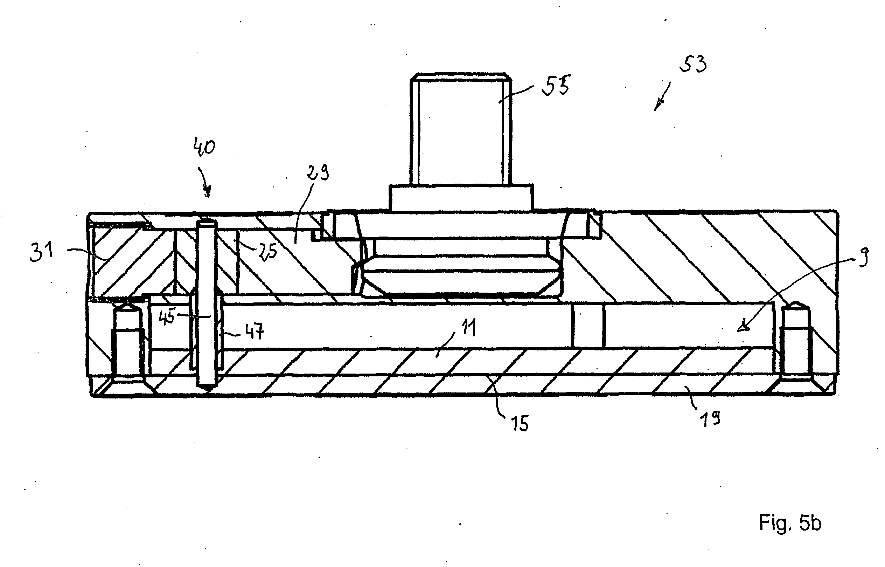

Fig. 5 zeigt ein Nullspannsystem 53, mit welchem ein Aufnahmeelement 55 in einer exakt definierten Position fixiert und klemmbar ist. Wie aus der perspektivischen, teilweise aufgebrochenen Ansicht gemäß Fig. 5a ersichtlich, weist das Nullspannsystem 53 hierzu drei Klemm- und/oder Bremssysteme 40 auf, die jeweils um einen Winkelabstand von 120° versetzt sind. Die Klemm- und/oder Bremsvorrichtungen 40 gemäß Fig. 5 sind ähnlich ausgebildet wie die Klemm- und/oder Bremsvorrichtungen 30 gemäß Fig. 4. Auch hier wird das Prinzip eines hülsenartigen Betätigungselements 47 verwendet, welches ein stiftartiges Eingriffsteil 45 umfasst. Das Feststoffkörper-Hydraulikmedium 25, ein verschiebbarer Kolben 29 und ein Verschlussdeckel 31 sind in gleicher Weise wie bei der Ausführungsform nach Fig. 4 in jeweils eine radial zu dem zu klemmenden, rotationssymmetrischen Aufnahmeelement 25 vorgesehen. An der Unterseite des Nullspannsystems 53 ist ein Pneumatikzylinder 9 integriert. Dieser umfasst einen Kolben 11, der in seiner Ausgangsstellung an einem Deckel 19 des Pneumatikzylinders 9 anliegt. Ein Druckraum 15 wird zwischen der Rückseite des Kolbens 11 und der Innenwandung des Deckels 19 gebildet. Aus Gründen der Einfachheit sind wiederum Zuführleitungen für das Zuführen von Druckluft nicht dargestellt. Der Kolben 11 ist mit den hülsenartigen Betätigungselementen 47 für die drei Klemm- und/oder Bremsvorrichtungen 40 verbunden. Des Weiteren sind stiftförmige Eingriffselemente 45 vorgesehen, die jeweils das Feststoffkörper-Hydraulikmedium 25 durchragen und fest zwischen einer oberen Wandung (Fig. 5b) und dem Deckel 19 fixiert sind.

Auf diese Weise lässt sich durch eine Druckbeaufschlagung des Druckraums 15 über den Kolben 11 des Pneumatikzylinders 9 gleichzeitig eine Bewegung aller drei Betätigungselemente 47 bzw. das Ausüben einer Kraft zur Erzeugung einer Druckerhöhung im jeweiligen Medium 25 erreichen. Durch die Änderung der Gestalt des Volumens jedes Feststoffkörper-Hydraulikmediums 25 bzw. durch die Änderung der im jeweiligen Feststoffkörper-Hydraulikmedium 25 wirkenden Druckkraft ergibt sich ein Schließen eines Spalts zwischen den Vorderseiten der Kolben 29 und dem Außenumfang des Aufnahmeelements 25 bzw. nach dem Anliegen der Kolben 29 an das Aufnahmeelement 55 eine entsprechende Erhöhung der Anpresskräfte.

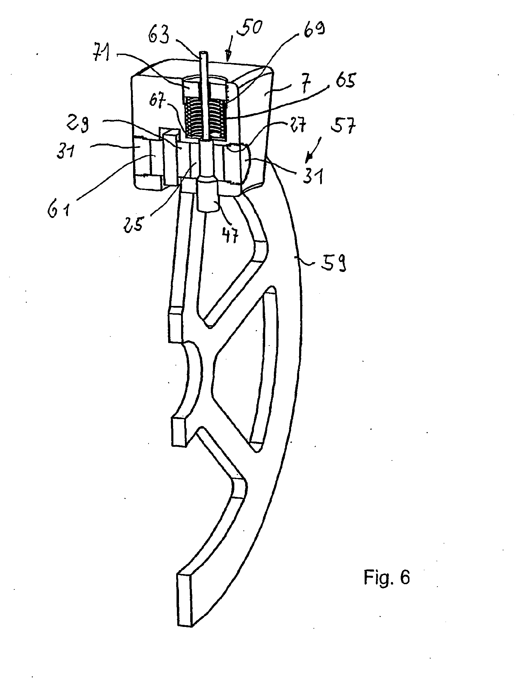

Fig. 6 zeigt eine Scheibenbremse 57, welche eine Bremsscheibe 59 und eine Klemm- und/oder Bremseinrichtung 50 umfasst. Die Bremseinrichtung 50 weist ein Gehäuse 7 auf, in welchem, ähnlich wie bei den Ausführungsformen nach den Fig. 4 und 5 in einer zylindrischen Ausnehmung 27 ein Feststoffkörper-Hydraulikmedium 25 und ein Verschlusselement 31 sowie ein als Beaufschlagungselement für die Bremsscheibe 59 wirkender Kolben 29 aufgenommen sind. Der Kolben 29 kann im Fall der in Fig. 6 dargestellten Scheibenbremse als Bremsbelag ausgebildet sein und aus einem hierfür geeigneten Material bestehen. Auf der dem Kolben 29 gegenüber liegenden Seite ist ein weiterer Bremsbelag 61 in einer entsprechenden zylindrischen Ausnehmung im Gehäuse 7 gehalten, welcher mit einem in das Gehäuse 7 einschraubbaren Verschlusselement 31 verbunden sein kann. Vorzugsweise ist auch der Kolben 29 mit dem Feststoffkörper-Hydraulikmedium 25 verbunden.

Das Feststoffkörper-Hydraulikmedium 25 ist bei der in Fig. 6 dargestellten Ausführungsform einer Klemm- und/oder Bremsvorrichtung 50 von einem stiftartigen Betätigungselement 47 durch griffen, welches analog der Ausführungsform nach Fig. 4 ausgebildet ist. Das einen geringeren Querschnitt aufweisende Ende des Betätigungselements 47, welches das Feststoffkörper-Hydraulikmedium 25 durchgreift, ist mit einem Zugseil 63 verbunden.

Das Zugseil ist durch eine zylindrische Bohrung 65 im Gehäuse 7 geführt, in welches das einen kleineren Querschnitt aufweisende Ende des Betätigungselements 47 hineinragt. Am Boden der zylindrischen Bohrung 65 ist eine Scheibe 67 vorgesehen, welche eine zentrische Bohrung aufweist, durch welche das Zugseil 63 hindurchgeführt ist. Die Scheibe 67 dient mit ihrer unteren Stirnseite als Anschlag für die Stirnseite des Betätigungselements 47 und mit ihrer oberen Stirnseite als Anschlag für eine in der Bohrung 65 vorgesehene Schraubenfeder 69. Das obere Ende der Schraubenfeder 69 beaufschlagt ein in die Ausnehmung 65 einschraubbares Verschlusselement 71, welche eine zentrische Bohrung aufweist, durch welche das Zugseil 63 hindurchgeführt ist.

Auf diese Weise kann durch das Aufbringen einer Zugkraft mittels des Zugseils 63 das Betätigungselement 47 mit dem rückwärtigen Bereich, welcher einen größeren Querschnitt aufweist, in das Feststoffkörper-Hydraulikmedium 25 hineinbewegt werden. Hierdurch ergibt sich in der vorstehend beschriebenen Art und Weise eine Bewegung des Kolbens 29 in Richtung auf die Bremsscheibe 59 und nach dem Anliegen des Kolbens 29 an der Bremsscheibe 59 eine entsprechende Bremskraft. Durch die Scheibe 67 und die Schraubenfeder 69 wird ein selbsttätiges Rückstellen des Betätigungselements 47 erreicht, wenn die auf das Zugseil 63 wirkende Zugkraft geringer ist als die von der Schraubenfeder 69 auf die Scheibe 67 ausgeübte Kraft.

Selbstverständlich kann anstelle des stationären Bremsbackens 61 auch auf dieser Seite der Bremsscheibe 59 im Gehäuse 7 eine zweite Klemm- und/oder Bremsvorrichtung 50 vorgesehen sein. Die beiden Zugseile können miteinander verbunden sein und an diesem Verbindungsseil kann das eigentliche Zugseil angreifen. Anstelle eines Verbindungsseils kann in diesem Fall selbstverständlich auch ein starres Verbindungselement vorgesehen sein.

Gegenüber herkömmlichen Scheibenbremsen weist diese Scheibenbremse den Vorteil eines äußerst einfachen und kompakten Aufbaus auf, wobei keinerlei Kraftumlenkungen, Hebelmechaniken, Kulissenführungen oder dergleichen erforderlich sind. Gegenüber rein ölhydraulischen Bremsen weist eine derartige Scheibenbremse den Vorteil auf, dass durch die Verwendung des Feststoffkörper-Hydraulikmediums keinerlei Dichtungsprobleme auftreten können.

Abschließend sei darauf hingewiesen, dass, soweit sinnvoll, selbstverständlich einzelne Merkmale, die vorstehend nur im Zusammenhang mit jeweils einer bestimmten Ausführungsform beschrieben sind, auch analog mit anderen Ausführungsformen kombinierbar sind.

Abschließend sei darauf hingewiesen, dass das Antreiben des Betätigungselements grundsätzlich durch jede geeignete Antriebseinrichtung erfolgen kann, beispielsweise auch durch eine elektromagnetische Antriebseinrichtung, wie einen Hubmagneten, der mit dem Betätigungselement oder einem damit verbundenen Element gekoppelt ist.

Das Betätigungselement kann auch vorgespannt sein, beispielsweise mittels eines federnden Elements, welches das Betätigungselement in seiner Ruhelage so beaufschlagt, dass die Klemm- und/oder Bremsvorrichtung das jeweilige Element klemmt oder bremst.

Der Antrieb kann dann so ausgebildet sein, dass bei dessen Aktivierung das Betätigungselement so bewegt wird, dass die über die damit verursachte Änderung der Gestalt des Volumens des Feststoffkörper-Hydraulikmediums die klemmenden oder bremsenden Kräfte, die auf das jeweilige Element ausgeübt werden, reduziert oder ganz aufgehoben werden.

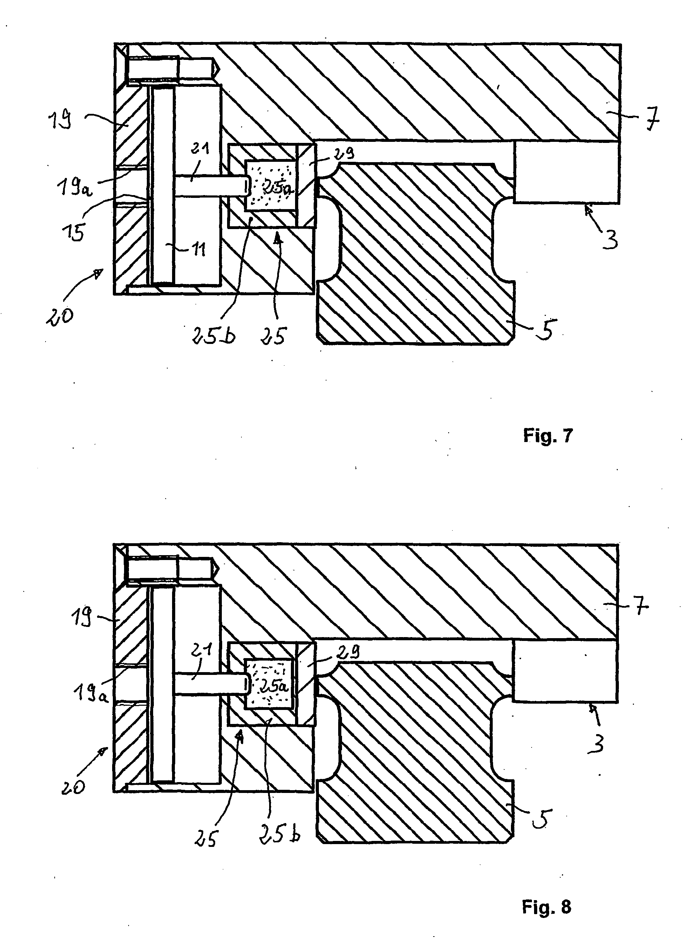

Fig. 7 zeigt eine ähnliche Ausführungsform einer Klemm- und/oder Bremseinrichtung, wie sie in Fig. 3 dargestellt ist. Identische oder funktionsidentische Elemente sind daher mit identischen Bezugszeichen bezeichnet, so dass diesbezüglich auf die vorstehende Beschreibung der Fig. 3 verwiesen werden kann.

Der wesentliche Unterschied in Fig. 7 besteht darin, dass das Hydraulikmedium 25 zwei unterschiedliche Komponenten aufweist, nämlich ein Feststoffkörper-Hydraulikmedium 25b und ein darin eingeschlossenes Sekundär-Hydraulikmedium 25a, welches als flüssiges oder pastöses Hydraulikmedium ausgebildet sein kann oder aus einem Feststoffkörper-Hydraulikmedium von geringerer Shore-Härte als das Feststoffkörper-Hydraulikmedium 25a, wobei die Shore-Härte so gewählt sein sollte, dass das Medium ausreichende Materialbewegungen oder Verlagerungen, insbesondere in der Umgebung des dornartigen Betätigungselements 21 zulässt, ohne dass auch bei häufiger Betätigung eine Zerstörung des Materials eintritt.

Das Feststoffkörper-Hydraulikmedium 25b weist im dargestellten Ausführungsbeispiel eine topfförmige Gestalt auf, wobei die Stirnflächen der ringförmigen Wandung mit dem Beaufschlagungselement verbunden sind, beispielsweise durch Verkleben oder Vulkanisieren. Das Sekundär-Hydraulikmedium 25a ist damit durch das Beaufschlagungselement 29 und die Innenwandung des Feststoffkörper-Hydraulikmediums 25b begrenzt.

Das Betätigungselement 21 durchgreift das Feststoffkörper-Hydraulikmedium 25b in einem Durchbruch und taucht in das Sekundär-Hydraulikmedium 25a ein. Der infolge eines Eintauchens entstehende Druck bzw. die betreffende Druckerhöhung wird vom Sekundär-Hydraulikmedium 25a auf das Beaufschlagungselement und das Feststoffkörper-Hydraulikmedium 25b übertragen, welches damit ebenfalls eine Gestaltänderung erfährt, und über die Stirnseite der ringförmigen Wandung diesen Druck ebenfalls auf das Beaufschlagungselement überträgt. Der erhöhte Druck wirkt gleichzeitig auch über die Innenfläche des Durchbruchs im Feststoffkörper-Hydraulikmedium 25b auf das Betätigungselement 29, wodurch sich durch die erhöhte Anpresskraft eine verbesserte Dichtwirkung ergibt.

Da die größten Materialbewegungen bzw. -Verlagerung bei einem so ausgebildeten Hydraulikmedium 25 in dem Sekundär-Hydraulikmedium 25a erfolgen, wird eine Zerstörung des Materials im Feststoffkörper-Hydraulikmedium vermieden und somit die Standzeit verbessert.

Fig. 8 zeigt eine sehr ähnliche Ausführungsform, wobei hier das Feststoffkörper-Hydraulikmedium 25b an seinem Boden, das heisst in dem dem Beaufschlagungselement 29 benachbarten Bereich ebenfalls geschlossen ist. Hierdurch kann das Hydraulikmedium 25 als eigenständiges Bauelement realisiert sein. Selbstverständlich kann jedoch auch in diesem Fall das Hydraulikmedium 25 mit dem Beaufschlagungselement 29 verbunden sein.

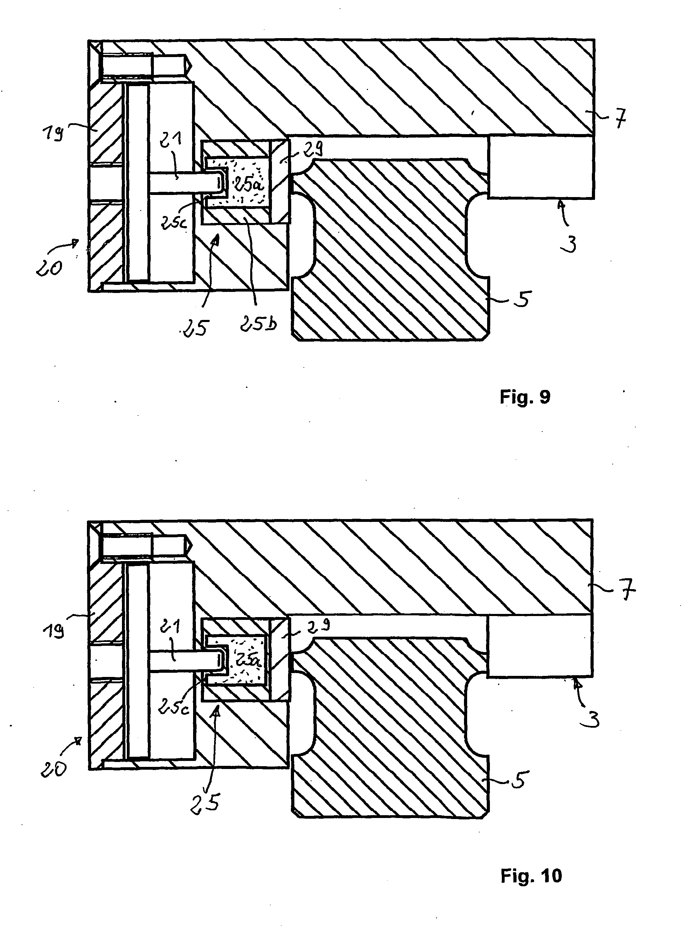

Die in Fig. 9 und 10 dargestellten Ausführungsbeispiele unterscheiden sich von den in den Fig. 7 und 8 dargestellten Ausführungsbeispielen dadurch, dass das Hydraulikmedium 25 keinen Durchbruch für das Betätigungselement 21 aufweist. Dieses beaufschlagt im Fall der in Fig. 9 und 10 gezeigten Varianten einen Membranbereich 25c, welcher als Teil des Feststoffkörper-Hydraulikmediums 25b ausgebildet ist. Damit entfallen Dichtungsprobleme zwischen dem Betätigungselement 21 und dem Hydraulikmedium 25 vollständig. Die Klemm- und/oder Bremsvorrichtung 20 gemäß den Fig. 9 und 10 entsprechen im Übrigen, insbesondere was die Ausgestaltung des Hydraulikmediums 25 anbelangt, den Ausführungsformen gemäß Fig. 7 bzw. Fig. 8, so dass auf die diesbezüglichen Beschreibungen verwiesen werden kann.

## Patentansprüche

1. Klemm- und/oder Bremsvorrichtung, insbesondere pneumatisch betätigbare Klemm- und/oder Bremsvorrichtung,
(a) mit einem Gehäuse (7), welches einen Raum (27) aufweist, in welchem ein zumindest teilweise als Feststoffkörper ausgebildetes Hydraulikmedium (25) aufgenommen ist,
(b) wobei der Raum (27) zur Aufnahme des Hydraulikmediums (25) einerseits durch eine Wandung des Gehäuses (7) und andererseits durch ein Beaufschlagungselement (29) begrenzt ist, und
(c) mit wenigstens einem Betätigungselement (21, 41, 47), welches das Hydraulikmedium (25) zur Erzeugung einer Klemm- und/oder Bremskraft, welche von dem Hydraulikmedium (25) auf das Beaufschlagungselement (29) übertragbar ist, beaufschlagt,
(d) wobei das wenigstens eine Betätigungselement (21, 41, 47) stift- oder dornartig ausgebildet ist,
(e) wobei das Betätigungselement (21, 41, 47) entlang einer vorgegebenen Raumkurve bewegbar ausgebildet ist und
(f) wobei das Betätigungselement (21, 41, 47) das Hydraulikmedium durch einen Durchbruch in der den Raum (27) zur Aufnahme des Hydraulikmediums (25) begrenzenden Wandung des Gehäuses (7) beaufschlagt,
**dadurch gekennzeichnet,**
(g) **dass** das Hydraulikmedium (25) aus einem elastischen Feststoffkörper-Hydraulikmedium (25b) gebildet ist, welches ein flüssiges, pastöses oder aus einem Feststoffkörper niedrigerer Shorehärte bestehendes Sekundär-Hydraulikmedium (25a) umgibt.

2. Klemm- und/oder Bremsvorrichtung nach Anspruch 1, **dadurch gekennzeichnet, dass** das elastische Feststoffkörper-Hydraulikmedium (25b) aus einem Elastomer besteht.

3. Klemm- und/oder Bremsvorrichtung nach einem der vorhergehenden Ansprüche, **dadurch gekennzeichnet, dass** das Beaufschlagungselement (29) mit dem Gehäuse (7) einstückig ausgebildet oder lösbar mit diesem verbunden ist und dass das Beaufschlagungselement (29) einen elastisch biegbaren Bereich aufweist, welcher vom Hydraulikmedium (25) beaufschlagt wird.

4. Klemm- und/oder Bremsvorrichtung nach einem der vorhergehenden Ansprüche, **dadurch gekennzeichnet, dass** das Beaufschlagungselement (29) als im Gehäuse verschiebbar geführter Kolben ausgebildet ist.

5. Klemm- und/oder Bremsvorrichtung nach Anspruch 4, **dadurch gekennzeichnet, dass** das Hydraulikmedium (25) fest mit dem Beaufschlagungselement (29) verbunden ist, beispielsweise durch Kleben oder Vulkanisieren.

6. Klemm- und/oder Bremsvorrichtung nach Anspruch 5, **dadurch gekennzeichnet, dass** das Feststoffkörper-Hydraulikmedium (25b) einen Durchbruch aufweist, durch welchen das Betätigungselement (21, 41, 47) abdichtend geführt ist.

7. Klemm- und/oder Bremsvorrichtung nach Anspruch 5, **dadurch gekennzeichnet, dass** das Feststoffkörper-Hydraulikmedium (25b) einen Membranbereich (25c) aufweist, welchen das Betätigungselement (21) beaufschlagt, wobei der Membranbereich (25c) derart elastisch ausgebildet ist, dass der vorbestimmte Bewegungsweg des Betätigungselement (21) ermöglicht wird.

8. Klemm- und/oder Bremsvorrichtung nach einem der vorhergehenden Ansprüche, **dadurch gekennzeichnet, dass** das Feststoffkörper-Hydraulikmedium (25b) einen Wandungsbereich aufweist, welcher den Bereich begrenzt, in dem das Sekundär-Hydraulikmedium (25a) eingeschlossen ist, und welcher mit der diesem Bereich abgewandten Oberfläche das Beaufschlagungselement (29) beaufschlagt.

9. Klemm- und/oder Bremsvorrichtung nach einem der vorhergehenden Ansprüche, **dadurch gekennzeichnet, dass** das Feststoffkörper-Hydraulikmedium (25b) einen ringförmig geschlossenen Wandungsbereich aufweist, welcher den Bereich begrenzt, in dem das Sekundär-Hydraulikmedium (25a) eingeschlossen ist, und welcher mit seiner ringförmigen Stirnseite mit dem Beaufschlagungselement (29) verbunden ist.

10. Klemm- und/oder Bremsvorrichtung nach einem der vorhergehenden Ansprüche, **dadurch gekennzeichnet, dass** das Hydraulikmedium (25) eine zylindrische Form aufweist oder ringförmig ausgebildet ist.

11. Klemm- und/oder Bremsvorrichtung nach einem der vorhergehenden Ansprüche, **dadurch gekennzeichnet, dass** das wenigstens eine Betätigungselement (21, 47) als Stift ausgebildet ist, der in Richtung der Bewegungsrichtung des Stifts zur Erzeugung einer Druckerhöhung im Hydraulikmedium (25) gesehen, im rückwärtigen Bereich einen größeren Querschnitt aufweist als im vorderen Bereich, und dass der Stift (21) das Hydraulikmedium (25) vollständig durchgreift.

12. Klemm- und/oder Bremsvorrichtung nach Anspruch 11, **dadurch gekennzeichnet, dass** das vordere Ende des Stifts (21) in eine Ausnehmung des Gehäuses (7) eingreift.

13. Klemm- und/oder Bremsvorrichtung nach Anspruch 12, **dadurch gekennzeichnet, dass** die Ausnehmung so ausgebildet ist, dass der Boden der Ausnehmung die axiale Bewegung des Stifts (21) begrenzt.

14. Klemm- und/oder Bremsvorrichtung nach Anspruch 11, **dadurch gekennzeichnet, dass** das vordere Ende des Stifts (21) das Gehäuse (7) durchragt.

15. Klemm- und/oder Bremsvorrichtung nach einem der vorhergehenden Ansprüche, **dadurch gekennzeichnet, dass** das wenigstens eine Betätigungselement als Hülsenteil (41) ausgebildet ist und dass ein Eingriffsteil (45) vorgesehen ist, welches das Hydraulikmedium teilweise oder vollständig durchgreift und welches einen Querschnitt aufweist, der im Wesentlichen komplementär zum Querschnitt des Innenraums des Hülsenteils (41) ausgebildet ist, so dass das Hülsenteil (41) im wesentlichen spielfrei auf dem Eingriffsteil (45) verschiebbar ist, wobei das Hülsenteil (41) während des gesamten möglichen Bewegungswegs mit dem Eingriffsteil (45) in Eingriff steht.

16. Klemm- und/oder Bremsvorrichtung nach Anspruch 15, **dadurch gekennzeichnet, dass** das Eingriffsteil (45) fest oder lösbar mit dem Beaufschlagungselement (29) verbunden ist.

17. Klemm- und/oder Bremsvorrichtung nach Anspruch 15 oder 16, **dadurch gekennzeichnet, dass** sich die Außenwandung des vorderen Endes des Hülsenteils (41 ), welches das Eingriffsteil (45) umfasst, verjüngt, beispielsweise einen angefasten Bereich aufweist.

18. Klemm- und/oder Bremsvorrichtung nach einem der vorhergehenden Ansprüche, **dadurch gekennzeichnet, dass** ein Pneumatikzylinder (9) vorgesehen ist, welcher das stift- oder dornartige Betätigungselement (21) beaufschlagt.

19. Klemm- und/oder Bremsvorrichtung nach einem der vorhergehenden Ansprüche, **dadurch gekennzeichnet, dass** ein Betätigungsseil (63) mit dem stiftartig ausgebildeten Betätigungselement (47) verbunden ist, mit welchem eine Zugkraft auf das Betätigungselement (47) ausübbar ist.

## Claims

1. A clamping and/or braking device, in particular a pneumatically actuatable clamping and/or braking device,
(a) having a housing (7) which has a space (27) in which a hydraulic medium (25) is accommodated that is formed at least in part as a solid body,
(b) wherein the space (27) for accommodating the hydraulic medium (25) is delimited on the one hand by a wall of the housing (7) and on the other hand by an impinging element (29), and
(c) having at least one actuating element (21, 41, 47) which acts upon the hydraulic medium (25) in order to generate a clamping and/or braking force which can be transferred from the hydraulic medium (25) to the impinging element (29),
(d) wherein the at least one actuating element (21, 41, 47) is formed like a pin or a spike,
(e) wherein the actuating element (21, 41, 47) is formed so as to be movable along a given spatial curve, and
(f) wherein the actuating element (21, 41, 47) acts upon the hydraulic medium through an opening in the wall of the housing (7) that delimits the space (27) for accommodating the hydraulic medium (25),
**characterised in that**
(g) the hydraulic medium (25) is formed from an elastic solid-body hydraulic medium (25b) which surrounds a secondary hydraulic medium (25a) that is fluid, pasty or consists of a solid body of lower Shore hardness.

2. A clamping and/or braking device according to claim 1, **characterised in that** the elastic solid-body hydraulic medium (25b) consists of an elastomer.

3. A clamping and/or braking device according to one of the preceding claims, **characterised in that** the impinging element (29) is formed so as to be in one piece with the housing (7) or is detachably connected therewith, and **in that** the impinging element (29) has an elastically flexible region upon which the hydraulic medium (25) acts.

4. A clamping and/or braking device according to one of the preceding claims, **characterised in that** the impinging element (29) is formed as a piston that is guided in a displaceable manner in the housing.

5. A clamping and/or braking device according to claim 4, **characterised in that** the hydraulic medium (25) is fixedly connected to the impinging element (29), for example by adhesion or vulcanization.

6. A clamping and/or braking device according to claim 5, **characterised in that** the solid-body hydraulic medium (25b) has an opening through which the actuating element (21, 41, 47) is guided in a sealing manner.

7. A clamping and/or braking device according to claim 5, **characterised in that** the solid-body hydraulic medium (25b) has a membrane region (25c) upon which the actuating element (21) acts, wherein the membrane region (25c) is formed elastically in such a way that the predetermined path of movement of the actuating element (21) is rendered possible.

8. A clamping and/or braking device according to one of the preceding claims, **characterised in that** the solid-body hydraulic medium (25b) has a wall region which delimits the region in which the secondary hydraulic medium (25a) is enclosed and which with the surface that is remote from this region acts upon the impinging element (29).

9. A clamping and/or braking device according to one of the preceding claims, **characterised in that** the solid-body hydraulic medium (25b) has an annularly closed wall region which delimits the region in which the secondary hydraulic medium (25a) is enclosed and which with its annular end face is connected to the impinging element (29).

10. A clamping and/or braking device according to one of the preceding claims, **characterised in that** the hydraulic medium (25) has a cylindrical form or is formed so as to be annular.

11. A clamping and/or braking device according to one of the preceding claims, **characterised in that** the at least one actuating element (21, 47) is formed as a pin which, viewed in the direction of the movement direction of the pin for the generation of an increase in pressure in the hydraulic medium (25), has a larger cross-section in the rearward region than in the forward region, and **in that** the pin (21) reaches completely through the hydraulic medium (25).

12. A clamping and/or braking device according to claim 11, **characterised in that** the front end of the pin (21) engages into a recess of the housing (7).

13. A clamping and/or braking device according to claim 12, **characterised in that** the recess is formed in such a way that the base of the recess delimits the axial movement of the pin (21).

14. A clamping and/or braking device according to claim 11, **characterised in that** the front end of the pin (21) projects through the housing (7).

15. A clamping and/or braking device according to one of the preceding claims, **characterised in that** the at least one actuating element is formed as a sleeve portion (41), and **in that** an engaging portion (45) is provided that reaches partly or completely through the hydraulic medium and which has a cross-section that is formed so as to be substantially complementary to the cross-section of the interior space of the sleeve portion (41) so that the sleeve portion (41) can be displaced substantially without play on the engaging portion (45), wherein the sleeve portion (41) is engaged with the engaging portion (45) throughout the entire possible path of movement.

16. A clamping and/or braking device according to claim 15, **characterised in that** the engaging portion (45) is connected to the impinging element (29) in a fixed or detachable manner.

17. A clamping and/or braking device according to claim 15 or 16, **characterised in that** the outer wall of the front end of the sleeve portion (41) that comprises the engaging portion (45) tapers, for example has a bevelled region.

18. A clamping and/or braking device according to one of the preceding claims, **characterised in that** a pneumatic cylinder (9) is provided that acts on the pin- or spike-like actuating element (21).

19. A clamping and/or braking device according to one of the preceding claims, **characterised in that** connected to the actuating element (47) that is formed in a pin-like manner there is an actuating cable (63) with which a tensile force can be exerted on the actuating element (47).

## Revendications

1. Dispositif de blocage et/ou de freinage, en particulier dispositif de blocage et/ou de freinage à commande pneumatique,
(a) avec un boîtier (7), qui présente une chambre (27), qui reçoit un milieu hydraulique (25) qui se présente au moins en partie sous la forme d'un corps solide,
(b) dans lequel la chambre (27) destinée à recevoir le milieu hydraulique (25) est délimitée, d'une part, par une paroi du boîtier (7) et, d'autre part, par un élément d'alimentation (29), et
(c) avec au moins un élément de commande (21, 41, 47), lequel alimente le milieu hydraulique (25) pour la production d'une force de blocage et/ou de freinage, laquelle peut être transférée du milieu hydraulique (25) à l'élément d'alimentation (29),
(d) dans lequel le au moins un élément de commande (21, 41, 47) se présente sous la forme d'une tige ou d'une broche,
(e) dans lequel l'élément de commande (21, 41, 47) se présente de manière telle qu'il est déplaçable le long d'une courbe spatiale prédéterminée, et
(f) dans lequel l'élément de commande (21, 41, 47) alimente le milieu hydraulique à travers un passage dans la paroi du boîtier (7) délimitant la chambre (27) destinée à recevoir le milieu hydraulique (25),
**caractérisé en ce que**
(g) le milieu hydraulique (25) est formé d'un milieu hydraulique de corps solide (25b) élastique, lequel encercle un milieu hydraulique secondaire (25a) liquide, pâteux ou constitué d'un corps solide de faible dureté Shore.

2. Dispositif de blocage et/ou de freinage selon la revendication 1, **caractérisé en ce que** le milieu hydraulique de corps solide (25b) élastique consiste en un élastomère.

3. Dispositif de blocage et/ou de freinage selon l'une quelconque des revendications précédentes, **caractérisé en ce que** l'élément d'alimentation (29) est d'un seul tenant avec le boîtier (7) ou est relié à celui-ci de manière amovible et **en ce que** l'élément d'alimentation (29) présente une zone élastique ployable, laquelle est alimentée par le milieu hydraulique (25).

4. Dispositif de blocage et/ou de freinage selon l'une quelconque des revendications précédentes, **caractérisé en ce que** l'élément d'alimentation (29) se présente sous la forme d'un piston guidé pouvant coulisser dans le boîtier.

5. Dispositif de blocage et/ou de freinage selon la revendication 4, **caractérisé en ce que** le milieu hydraulique (25) est solidement lié à l'élément d'alimentation (29), par exemple par collage ou vulcanisation.

6. Dispositif de blocage et/ou de freinage selon la revendication 5, **caractérisé en ce que** le milieu hydraulique de corps solide (25b) présente un passage par lequel l'élément de commande (21, 41, 47) est guidé de manière étanche.

7. Dispositif de blocage et/ou de freinage selon la revendication 5, **caractérisé en ce que** le milieu hydraulique de corps solide (25b) présente une zone membranaire (25c) qui alimente l'élément de commande (21), dans lequel la zone membranaire (25c) est conformée d'une manière élastique telle que le trajet de déplacement prédéterminé de l'élément de commande (21) est rendu possible.

8. Dispositif de blocage et/ou de freinage selon l'une quelconque des revendications précédentes, **caractérisé en ce que** le milieu hydraulique de corps solide (25b) présente une zone de paroi qui délimite la zone dans laquelle le milieu hydraulique secondaire (25a) est confiné et qui alimente l'élément d'alimentation (29) avec la surface opposée à cette zone.

9. Dispositif de blocage et/ou de freinage selon l'une quelconque des revendications précédentes, **caractérisé en ce que** le milieu hydraulique de corps solide (25b) présente une zone de paroi fermée en forme d'anneau qui délimite la zone dans laquelle le milieu hydraulique secondaire (25a) est confiné et qui est reliée à l'élément d'alimentation (29) par son côté avant annulaire.

10. Dispositif de blocage et/ou de freinage selon l'une quelconque des revendications précédentes, **caractérisé en ce que** le milieu hydraulique (25) présente une forme cylindrique ou est formée en anneau.

11. Dispositif de blocage et/ou de freinage selon l'une quelconque des revendications précédentes, **caractérisé en ce que** le au moins un élément de commande (21, 47) se présente sous la forme d'une tige, qui, vue dans la direction de déplacement de la tige pour produire une augmentation de pression dans le milieu hydraulique (25), présente une section transversale plus grande dans la zone arrière que dans la zone avant, et **en ce que** la tige (21 ) pénètre franchement et complètement le milieu hydraulique (25).

12. Dispositif de blocage et/ou de freinage selon la revendication 11, **caractérisé en ce que** l'extrémité avant de la tige (21) s'engage dans une cavité du boîtier (7).

13. Dispositif de blocage et/ou de freinage selon la revendication 12, **caractérisé en ce que** la cavité est conformée de sorte que le fond de la cavité délimite le déplacement axial de la tige (21).

14. Dispositif de blocage et/ou de freinage selon la revendication 11, **caractérisé en ce que** l'extrémité avant de la tige (21) fait saillie dans le boîtier (7).

15. Dispositif de blocage et/ou de freinage selon l'une quelconque des revendications précédentes, **caractérisé en ce que** le au moins un élément de commande se présente sous la forme d'une partie manchonnée (41) et **en ce qu'**il est prévu une pièce de prise (45), laquelle pénètre partiellement ou complètement le milieu hydraulique et présente une section transversale qui se présente pour l'essentiel de façon complémentaire à la section transversale de l'espace interne de la partie manchonnée (41), de sorte que la partie manchonnée (41) puisse coulisser sensiblement sans jeu sur la pièce de prise (45), dans lequel la pièce manchonnée (41) est engagée sur la pièce de prise (45) au cours de la totalité du trajet de déplacement disponible.

16. Dispositif de blocage et/ou de freinage selon la revendication 15, **caractérisé en ce que** la pièce de prise (45) est reliée à l'élément d'alimentation de manière fixe ou amovible.

17. Dispositif de blocage et/ou de freinage selon la revendication 15 ou 16, **caractérisé en ce que** la paroi externe de l'extrémité avant de la partie manchonnée (41), laquelle comprend la pièce de prise (45), s'amincit, par exemple en présentant une zone biseautée.

18. Dispositif de blocage et/ou de freinage selon l'une quelconque des revendications précédentes, **caractérisé en ce qu'**il est prévu un cylindre pneumatique (9), lequel alimente l'élément de commande en forme de tige ou de broche.

19. Dispositif de blocage et/ou de freinage selon l'une quelconque des revendications précédentes, **caractérisé en ce qu'**un câble de commande (63) est relié à l'élément de commande (47) se présentant sous la forme d'une tige, avec lequel élément une force de traction peut être exercée sur l'élément de commande (47).
